# EUROPEAN PATENT SPECIFICATION

(11) **EP 2 718 551 B1**
(45) Date of publication and mention of the grant of the patent: **16.08.2017**
(21) Application number: 12728299.4
(22) Date of filing: 23.05.2012
(51) Int. Cl.: F01N 3/24, F01N 3/28, F01N 3/20, F01N 3/023, F01N 13/00

(54) **MODULAR CATALYST FOR EMISSION REDUCTION AND A METHOD OF OPERATING A CATALYST**
MODULARER KATALYSATOR ZUR EMISSIONSREDUZIERUNG UND VERFAHREN ZUM BETREIBEN EINES KATALYSATORS
CATALYSEUR MODULAIRE POUR LA RÉDUCTION DES ÉMISSIONS ET PROCÉDÉ DE OPÉRATION D'UN CATALYSEUR

(30) Priority: 09.06.2011 FI 20115571
(43) Date of publication of application: 16.04.2014
(73) Proprietor: Wärtsilä Finland Oy, 65380 Vaasa (FI)
(72) Inventor: WIDJESKOG, Klaus, FI-65730 Jungsund (FI); SADINMÄKI, Jukka, FI-80330 Joensuu (FI)
(74) Representative: LEITZINGER OY
(86) International application number: PCT/FI2012/050490
(87) International publication number: WO 2012/168540

(56) References cited:
- DE-A1-102004 062 897
- DE-A1-102009 017 684
- US-A- 3 556 735

## Description

### Background of the invention

An object of the present invention is a modular catalyst for emission reduction as defined in the preamble of the independent claim 1. Another object of the invention is a method for operating a catalyst as defined in the preamble of the independent claim 11.

The invention relates specifically to emission reduction of large internal combustion engines, especially of type diesel. These are widely used on both mobile offshore applications, e.g. ships, as well as on immovable onshore applications, e.g. diesel power plants. As the regulations for emissions are getting ever tighter and green values are emphasized, the need for advanced emission reduction is increasing. US3556735 discloses a muffler adapted to purify the exhaust gases of internal combustion engines. The preamble of claim 1 is based on this document.

One of the major techniques of controlling and reducing emissions of internal combustion origin is to use catalytic converters. They are based on using catalysts which promote chemical reactions in which toxic by-products of incomplete combustion are converted to less-toxic substances. As it comes to reduction of NOx (nitrogen oxides) emissions, the SCR-type (selective catalytic reduction) plays the major role in the field. The SCR method is based on converting NOx into diatomic nitrogen (N2) with the aid of a catalyst and reductants, such as ammonia and urea. The reductant is added to a stream of exhaust gas and absorbed onto a catalyst.

When applying catalyst solutions on internal combustion engines, one of the problems causing limitations on usability is the demand of space for necessary equipment. Restrictions set both by layout and available total space hamper the use of otherwise suitable solutions.

As it comes to cost management, the field of shipbuilding has been under pressure of cost reduction and issues such as investments on overcapacity of emission system for future upcoming needs has been forced to be excluded. In process of time, many vessels have become outdated in terms of emission reduction. Due to tightened legislation, expensive full scale renewals of emissions reduction systems have, however, been the only alternative for further operation in many cases. Consequently, an evident need for more flexible system has emerged.

### Summary of the invention

An objective of the invention is to provide a solution to avoid the above-mentioned problems in an economically sound manner and to provide possibility and means for an effortless update of the emission reduction equipment. In order to achieve this objective, a method according to the presently specified invention is characterized by what is set forth in the characterizing part of claim 1. In addition, a few preferred embodiments of the invention are presented in the dependent claims. On the other hand, the characterizing features of a method for operating a catalyst are set forth in the characterizing part of independent method claim 11. A few preferred embodiments of such a method are further presented in the dependent method claims.

The invention now provides a fairly simple and flexible solution for the problem explained above. According to the invention, a redesigned catalyst structure is proposed with a modular approach on the matter. The main structure of the catalyst arrangement is as such similar to previous catalyst apparatus in that catalyst units are disposed within an essentially cylinder or alike shaped shell section of the catalyst. In addition, beam elements or alike are provided to extend substantially parallel to the exhaust flow between the end sections of the catalyst. They are to serve as supporting elements for the catalyst such that basically any equipment within the catalyst can be disassembled and assembled independently with the help of the support means provided by one or several beam elements. The end sections of the catalyst are provided with suitable receiving means for the beam elements enabling a solid connection therebetween for major loads. Furthermore, the length of the beam elements is adapted/adaptable such that the number of necessary catalyst units and such like equipment within the catalyst can be increased and thus enlarge the capacity of the catalyst installation.

### Advantages provided by the invention

The present invention now provides emission reduction system with several benefits and improvements in relation to prior art type solutions both in terms of economic efficiency, flexibility in capacity and improvements on serviceability. The primary objective of achieving an easily expandable catalyst installation is now attainable with technically rather simple and cost effective means. The main benefits gained by the invention are based among others on the following facts.

First of all an arrangement according to present invention provides the emission reduction system with a flexible add-on capability. The ship owner can first acquire an SCR-equipment capable of filling the current legislative needs for emission reduction. Once the limits are tightened, the SCR-equipment can be furnished with one or more additional catalyst units without need to scrap the old one and buy totally a new one. The invention thus provides a simple and economic solution for the main problem explained above.

On top of that the new kind of arrangement also excels in easy serviceability. This is particularly based on easy assembly and disassembly of elements. By using suitably adapted beam-like elements as supporting structure for the units and the end sections of the catalyst, assembling measures for individual catalyst units therein can be performed with ease without need for any other installation work. Also a possibility to lift whole unit with elements as well as the whole catalyst installation is made possible with a suitable hinge or lifting system. Lifting can be performed both through the beam elements as well as through the end sections of the catalyst. Yet another benefit by the invention is realized in that the beam elements can provide the whole system and its individual units and components with support, whereby the positioning of the whole catalyst installation is basically free of any restrictions. All kinds of available spaces for the installation can be used and layout restrictions are thus far avoided.

Worth noticing is also the fact that the present invention provides a possibility to provide the catalyst and especially its beam elements with the additional equipment and functions without significant additional space requirements. The invention is also basically applicable on existing emission reduction systems with small modifications, thus providing an opportunity to utilize existing installations. Further advantages produced by the invention will be presented along with descriptions of the embodiments of the invention.

### Brief description of the drawings

Further characteristics and advantages of the invention will become better apparent from the following detailed description of a particular but not exclusive embodiment thereof, illustrated by way of non-limiting example in the accompanying drawings, wherein:
- Figures 1a-1c: present a general side view of a catalyst arrangement according to the invention and illustrate the flexibility of the system,
- Figures 2a-2b: present a perspective view of a partially disassembled catalyst with hinge arrangement and support system by the beam elements,
- Figure 3: shows also in perspective view from above a close-up of the catalyst in partially disassembled condition,
- Figure 4: shows in a side view a catalyst with a shell section slid aside,
- Figures 5a-5c: illustrate in a schematic side view the modular principal of the catalyst,
- Figures 6a-6c: show in a view from above various embodiments of the location of the beam elements,
- Figures 7a-7b: show partially a sectional side view of yet another embodiment of the catalyst and its shell section,
- Figure 8: shows in a perspective view a catalyst with auxiliary equipment installation on the beam elements,
- Figure 9: shows in a perspective view another additional installation on the beam elements, and
- Figures 10a-10b: present in a partial section view in a couple of another additional equipment with the beam elements.

### Description of the preferred embodiments of the invention

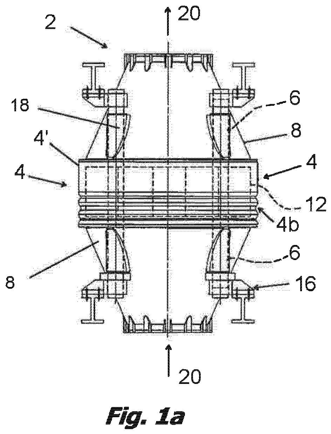

Figures 1a-1c show a side view of catalyst arrangements according to the present invention. They also illustrate the flexibility of a catalyst installation according to the present invention. The same catalyst is presented in all the three figures 1a-1c simply furnished with different assemblies of catalyst units.

In figure 1a the catalyst 2 is equipped with one body section 4 arranged between end sections 8 on both ends of the catalyst 2. The end sections 8 are preferably of cast steel. The catalyst 2 is in the main of type SCR (selective catalyst reduction) especially aimed for reduction of nitrogen oxides (NOx). The catalytic reactions performed by the catalyst takes place in the catalyst unit 12 disposed inside a body section 4 having a cylindrical outer shell 4'. The outer shell 4' is preferably provided with a bellows portion 4b, which can be used for eliminating possible heat elongations and vibrations.

Supporting beam elements 6 extend parallel to the catalyst and the exhaust flow 20 therein between the end sections 8 of the catalyst. The beam elements 6 can be hollow or solid. In latter case they can be used for several additional purposes, as will become apparent later. The end sections 8 are preferably of cast steel and they can provide support for the whole catalyst 2, especially when the catalyst is assembled horizontally the support beams carrying mainly the load of the body section 4. In a vertically assembled catalyst the support beams 6 can provide support for the whole catalyst 2 and its components such that the weight of basically all the main devices in the catalyst is carried with the help of the beam elements 6. The structure is designed such that the catalyst units 12 can be disassembled and assembled independently. There is no major need for dismantle of other equipment. Preferably the catalyst units 12 can be rotated around a beam 6 while at the same time hanging on it. This particularly eminent feature will, however, be described in more detail later.

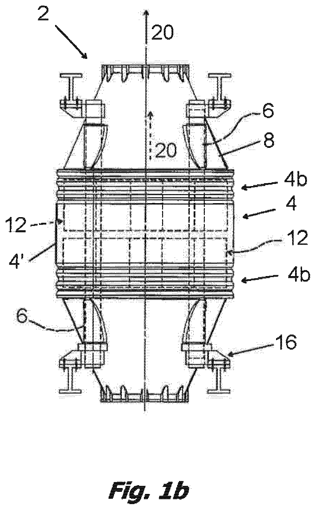

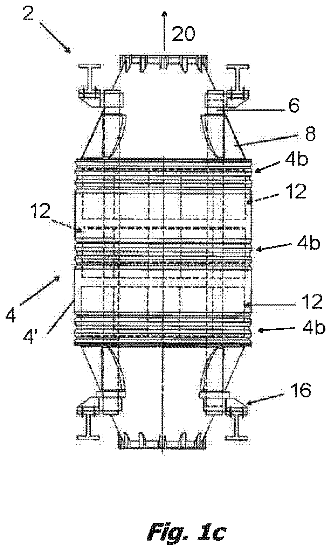

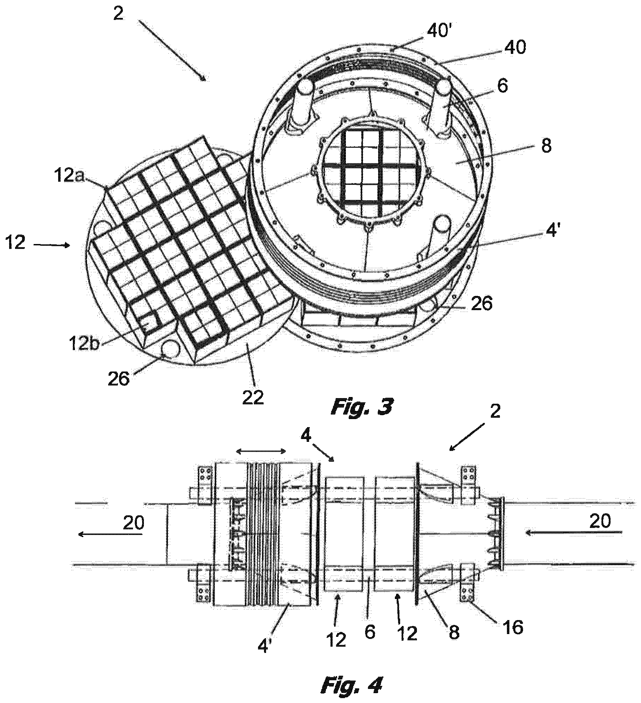

The end sections 8 of the catalyst housing are provided with suitable receiving means 18 for the beam elements. The beam elements 6 are arranged to receive one or more catalyst units 12, as needed. Once the limits for emissions become tighter and more capacity is needed for emission reduction, the existing catalyst installation can be lengthen by adding one or more catalyst units 12 therein. In Fig. 1b one additional catalyst unit 12 is placed inside the body section 4 comprising an extended shell section 4' having bellows portion at its both ends, whereas the end sections 8 remain the same. Catalyst units 12 are suspended by the beam elements 6 through suitable connecting means 26 (see Fig. 3). In Figure 1c is shown an embodiment wherein a third catalyst unit 12 has been added. The shell section 4 is extended further but the end sections 8 remain the same. It should be noted that other equipment can be placed into the catalyst as well, such as particle filters, silencers and alike. In Figs. 1a-1c the catalyst 2 is supported at its lower end via braces 16 on a support structure.

In Figs. 1a-1c the beam elements 6 have been shown as having different lengths due to the different lengths of the body portion 4. However, the length of the beam elements is preferably fixed so that it can accommodate, e.g. up to three catalyst units, whereby the catalyst 2 can first be provided with, e.g. one unit, and, if more capacity is later needed, with one or two additional units. It is also possible to provide the catalyst 2 initially with the body section 4 having an extended shell section 4', e.g. as shown in Fig. 1c, such that when more capacity is needed it is only needed to add one or two catalyst units without need to change the shell section 4'.

It is also contemplated that the beam elements can be adjustable in length, e.g. with a telescope type feature or similar function. An increase in the capacity of the catalyst 2 is thus gained in most economic and effortless manner.

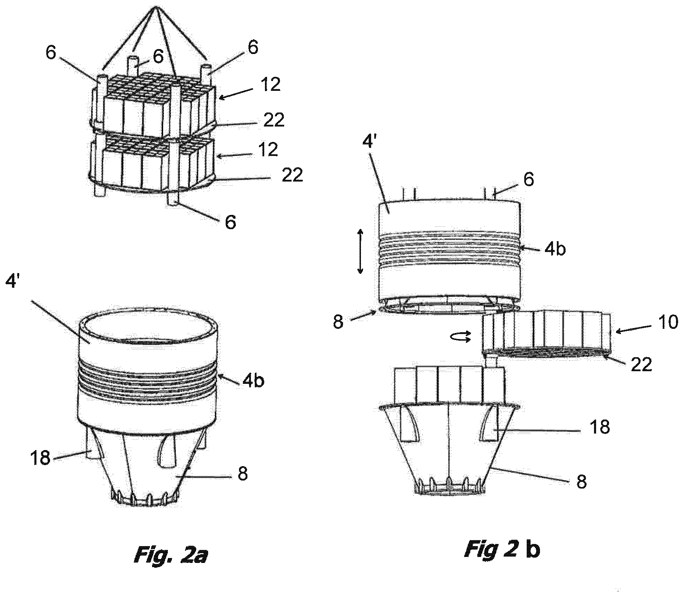

Figures 2a-2b present perspective views of a partially disassembled catalyst 2 comprising two catalyst units 12.

In Figure 2a the catalyst units 12 together with their platform 22 and beam elements 6 have been lifted up from the catalyst installation as a whole.

One eminent features provided by the catalyst installation has been illustrated in Figure 2b. In this case the shell section 4' has been slid over the upper end section 8 of the catalyst and all the beam elements 6 expect for one have been disjointed or simply lifted up in order to enable a rotation of one catalyst unit 12 still hanging on the last beam element 6. With the help of this hinge arrangement the catalyst unit 12 together with its platform 22, which serves as a holder for the element, can thus be rotated out from the catalyst for further processing. In this way the system makes it possible to perform with ease all kinds of overhaul and repairing measures without need for notable and laborious dismantling of the system.

The same disassembled condition of the catalyst is illustrated in Figure 3 as well, where the catalyst 2 is presented in perspective view from above. One of the platforms 22 having receiving means 26 for the beams together with the associated catalyst unit 12 is rotated out while being supported by one of the beam elements 6. The three other beam elements 6 have been lifted up through the end section 8 to create needed space for the turning manoeuvre of the catalyst unit 12. Also the shell section 4' has been slid up over the upper end section 8 of the catalysts 2. Connecting flanges 40 between two consecutive shell sections 4' appears as well. The flanges 40 are preferably provided with through holes 40' for bolts or similar connecting means (not shown). Likewise the general configuration of a catalyst unit 12 becomes apparent, where a normal structure of a grid of catalyst modules 12a consisting of single elements 12b is used.

On the beam structure it is also possible to build in other exhaust components after the catalyst units 12, for instance by extending the bars of the beam elements and moving the outlet cone, i.e. end section 8. The turning of the element frame platform 22 together with catalyst units 12 etc. in service position enables easy access to the elements compared to manholes. Service hatches (not shown) are of course still possible to use but not needed especially when the whole outer shell 4' of the body section 4 is easy and fast to lift for service.

Figure 4 shows in a side view a catalyst 2 in a horizontal position extending parallel to the exhaust flow 20 therein between the end sections 8 of the catalyst. In this case the end sections 8 can provide support for the whole catalyst 2 the support beams 6 carrying mainly the load of the body section 4 only. It is also possible to use suitable means 16 for the fastening of beam elements 6 to external fixing points, whereby the beams 6 can provide main support for the catalyst 2. In Fig. 4 the shell section 4' is shown slid aside to expose the catalyst units 12 for further measures.

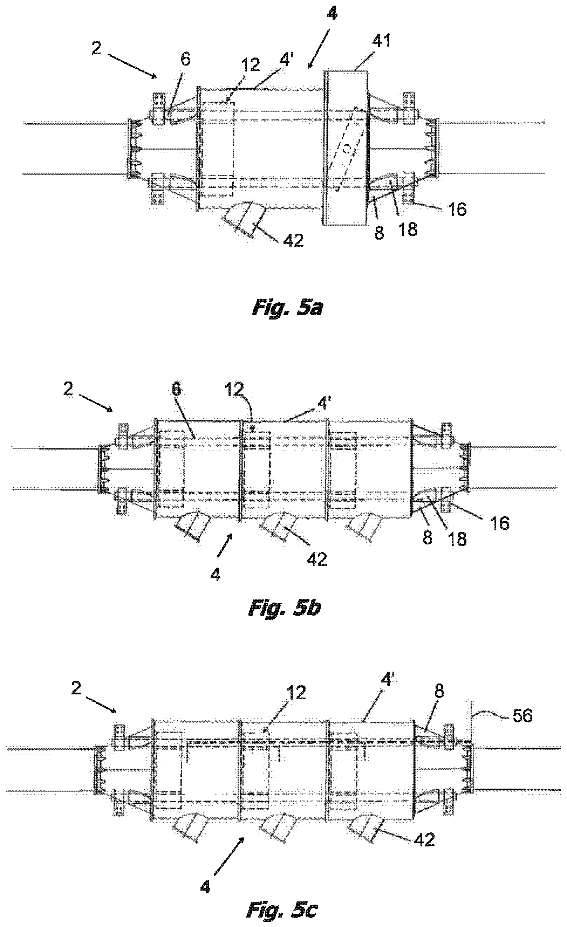

The modular concept of the invention appears particularly in Figures 5a-5c. The catalyst 2 is supported by the beams 6 via braces 16 to an external support structure (not shown). Beams 6 are received by receiving means 18 at the end sections 8. The number of various modules within a single and very same catalyst can be varied purely on the basis of the current need for functions and capacity. Catalyst 2 in Figure 5a includes just a single catalyst unit 12 and an additional valve unit 41 between one end section 8 and the body section 4. The shell section 4' comprises a T-piece 42 for instance for possible by-pass or recirculation. Instead or in addition to the valve unit 41, the catalyst can be provided with other additional elements between an end section 8 and the body section 4, e.g. a heating or cooling source, silencer, trap etc.

In Figure 5b the body section 4 of the catalyst 2 comprises three shell sections 4' each including one catalyst unit 12. Analogously to Figure 5a, the shell sections 4', are furnished with a T-piece 42.

The embodiment in Figure 5c comprises one of the additional features of the invention. The beams 6 can be utilized for a large number of additional purposes. These are such as assembly space for sootblowing pipes, sensoring cables etc. and as space for the equipment and piping of gas and fuel injection and reductant agent injection, recirculation of exhaust gas etc. This is illustrated schematically by reference 56. This particular embodiment of the invention will be described in more detail later on in this specification. Worth noticing is also the fact that no extra bellows components between the end sections 8 and the body section 4 are needed. Any heat elongation will be taken care of due to the body section 4 being arranged to float along the beams 6 provided with graphite sealings or alike (not shown) and due to the bellow parts 4b in the shell sections 4'.

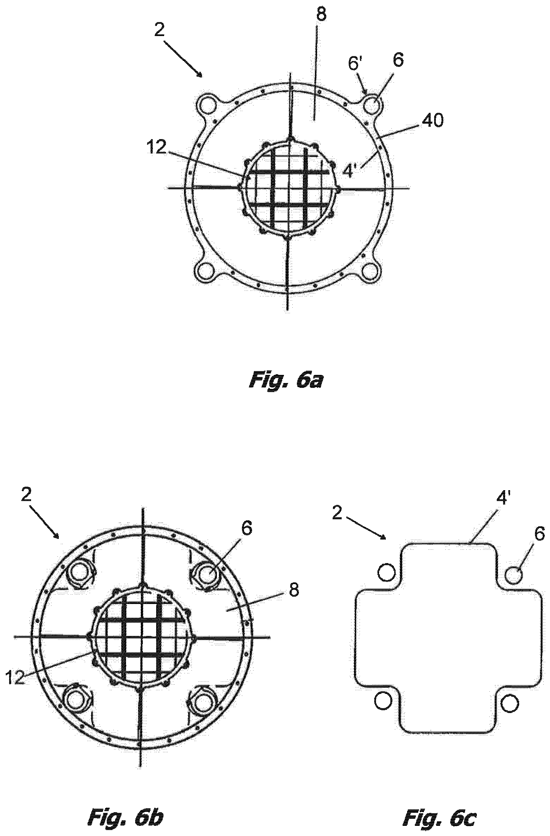

Figures 6a-6c show in a view from above various embodiments as it comes to the location of the beam elements 6. These can be arranged to locate both inside the body section, i.e. inside the main casing 4' of the catalyst 2 (as shown e.g. in Figs. 1a-1c), or outside the body section as illustrated in Figures 6a-6c. In Figure 6a the beams 6 are arranged to go through connecting holes 6' arranged at the periphery of the connecting flange 40 of the outer shell 4'. In case the beams 6 are located outside, cheaper steel for beams can be used, when standing in colder, non corrosive environment. Outer shell 4', is preferably round in cross-section but it can have any other shapes, e.g. as shown in Fig. 6c.

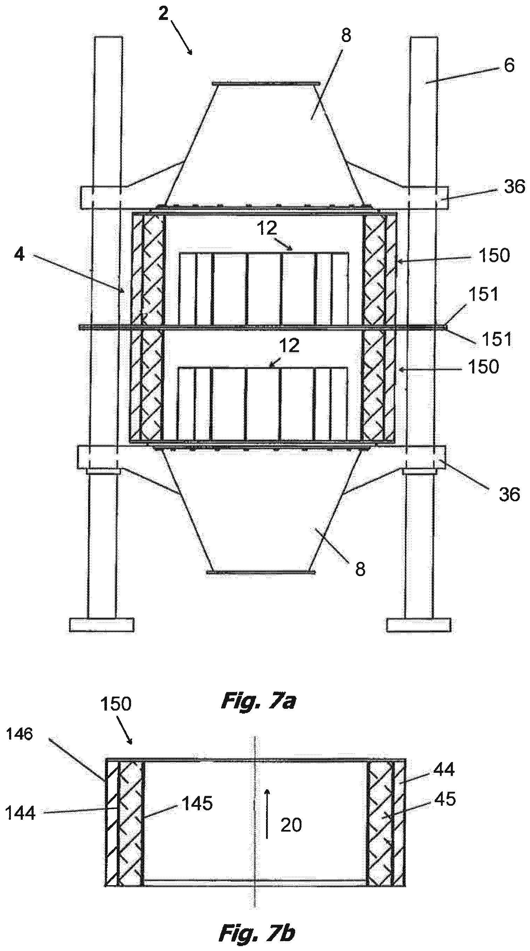

Figures 7a-7b show partially a sectional side view of the catalyst 2 as yet another embodiment of the invention. Here is presented big modularity since the body section 4 is assembled of complete modules 150 interconnected by joining sheets 150. Each module 150 comprises an element grid of the catalyst unit 12 and insulation layer 44 and silencer layer 45. The insulation layer 44 can also be replaced with reactive silencer element. This performs in particular for lower frequency noise reduction. The support function of the beam elements 6 becomes apparent as well. End sections 8 are provided with connecting braces 36 for fixing into the beams 6. Fig. 7b shows a module 150 in sectional side view. The module includes outer sheet 146, insulating layer 44, silencer layer 45, sheet 144 between the insulation and silencer layers, and inner sheet 145. The sheets 145, 146 and 144 can all be made as bellows, e.g. of steel plate. In some applications the outer sheet 146 could be also of fibreglass. Arrow 20 shows the exhaust flow direction.

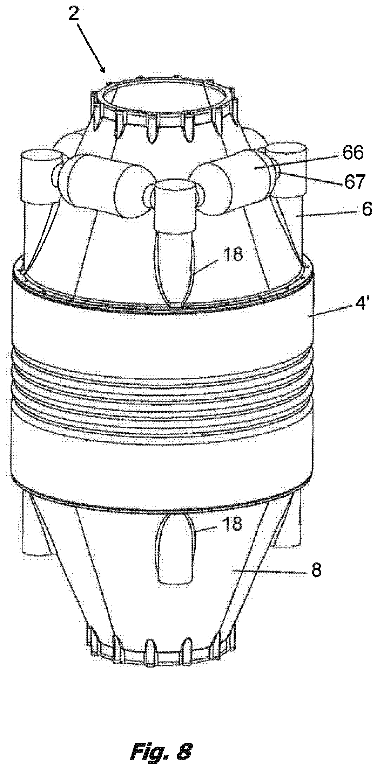

Figure 8 shows in a perspective view a special embodiment of the catalyst 2 with the previously mentioned auxiliary equipment in the form of tanks 66 each tank being connected between two adjacent receiving means 18 via connections 67. The adjacent receiving means 18 can be connected to each other also without the tanks, in which case fluid is supplied to the connections 67 and via the receiving means 18 to the beams 6 from an external reservoir (not shown). Connection 67 to the inside volumes of the beams 6 going through the receiving means 8 at the end sections 8 and inside the shell 4' can be furnished with a valve therebetween, flexible or non flexible, or any other means suitable for the desired purpose. One of the particular additional purposes of the beams 6 is to serve as assembly platform and room for the equipment used for sootblowing. The tanks 66 and/or beam volumes can be used as air as air reservoirs for sootblowing (1 or up to 4 tanks). The air or other suitable fluid to sootblowing nozzles can be transported inside the beams 6 by means of separate feedpipes (not shown). The beam can provide space for solenoids, mechanical valves and other possible purposes to name but a few. It is also possible to connect an external tank to the beams 6 and/or tanks 66. These tanks 66 and/or beam volumes can be used for separate needs, e.g. one as an air tank, one as a reductant agent tank and one as a gas tank.

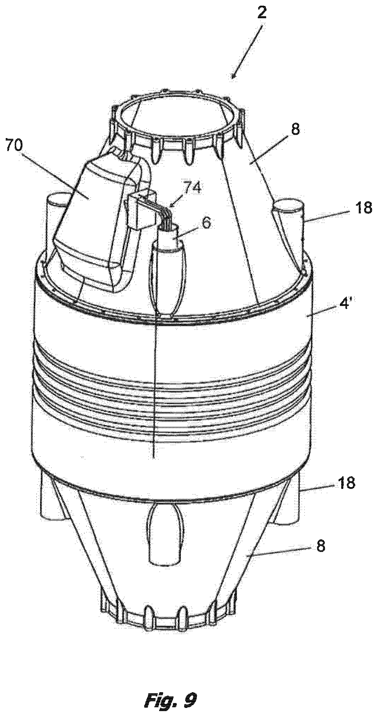

Figure 9 shows in a perspective view yet another additional installation on the beam elements 6 going through the receiving means 8 at the end sections 8 and inside the shell 4'. A tank 70 or equipment room can be integrated into the end section 8 of the catalyst 2, e.g. the tank 70 can be cast together with the end section 8. Here is just presented one shape of integrated tank. Shape can basically be whatever. And also one or several integrated tanks 70 can be used.

Several different systems can be build up with this method. Equipment such as air piping for sootblowing that is taken through beams for catalyst element sootblowing is furnished with reference 74. Several other applications can be performed likewise. For instance, it is possible to take preheated urea from this integrated tank 70 and inject into beams 6 and secondary circuit of exhaust gas, and inject reductant agent in gas format.

While using the beams 6 as air tanks, it is preferable to use a mechanical device for blowing into the sootblowing pipes. This in order to protect cheaper solenoid valves from excessive heat. Mechanical valves can be used for this function, for instance rotating type distributor or a suitable "piston" system. Each integrated tank 70 can be connected to one or several beam volumes.

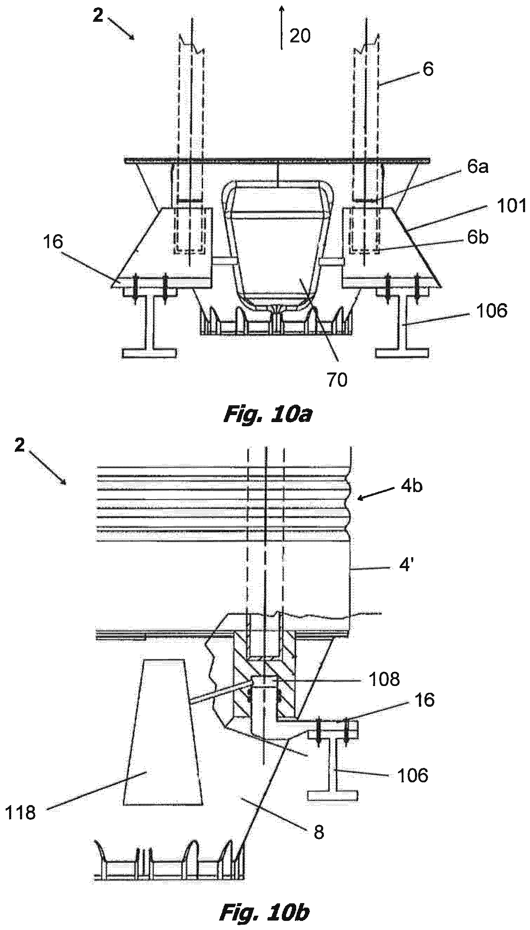

Figures 10a-10b present in a partial section view in a couple of another additional equipment with the beam elements. Tank 70 on a vertically positioned catalyst 2 extending essentially parallel to the exhaust flow 20 can be used all for same purposes as presented above. However, one important additional purpose of the tank 70 is its use as damping mass for damping the mass of catalyst elements or possibly the whole mass of the catalyst.

In a damping solution the lower end 6b of beam 6 can be plugged by a plug 6a at the end or small distance therefrom, as shown in Fig. 10a. External support structure 106 is utilized in this case. As it comes to damping of the beam equipment, hydraulic or pneumatic (air or exhaust gas) damper 101 for normal damping or jacket for servicing can be used. In case totally plugged damping is applied, the pressure media can be stored in an external tank 118. In addition, a cylinder part 108 for fluid damping can be integrated in the end section 8 as illustrated in Figure 10b. In Fig. 10b the catalyst 2 is supported by the lower end section 8 via braces 16 on the support structure 106. In Fig. 10b the beams are shown to go inside the outer shell 4' provided with the bellow part 4b.

It is obvious that the present invention can be embodied by a person skilled in the art in other specific forms without departing from the spirit or essential characteristics thereof. The disclosed embodiments in this specification are therefore considered in all respects to be illustrative and not restricted. The present invention may vary within the scope of the claims and features of the different embodiments can be combined. The foregoing description and all changes that come within the meaning and range and equivalence thereof are rather intended to be embraced therein.

## Claims

1. A modular catalyst (2) for emission reduction, the catalyst (2) comprising at least one body section (4), which an exhaust gas flow (20) is guided to flow through, the body section (4) comprising at least one catalyst unit (12) supplied with catalyst elements (12b) for emission reduction, and the catalyst (2) is provided with at least one end section (8), which the exhaust gas flow (20) is guided to flow through, and with at least one elongated beam element (6) connected to the end section (8) for supporting the at least one catalyst unit (12) of the body section (4), **characterized in that** the catalyst (2) is provided with means for supplying an operating fluid to the at least one catalyst unit (12) via the at least one end section (8) and via the at least one beam element (6).

2. A modular catalyst (2) as set forth in claim 1, **characterized in that** the end sections (8) of the catalyst (2) are provided with suitable receiving means (18) for the beam elements (6).

3. A modular catalyst (2) as set forth in claim 2, **characterized in that** the catalyst (2) is provided with a connection 67 to inside volumes of the beam elements (6) said connection going through the receiving means (18) at the end sections (8).

4. A modular catalyst (2) as set forth in claim 1, **characterized in that** the catalyst (2) has been provided with an end section (8) at its both ends.

5. A modular catalyst (2) as set forth in any of claims 1 or 4, **characterized in that** the catalyst unit(s) (12) and the beam element(s) (6) have been arranged in relation to each other such that at least one catalyst unit (12) can be taken out of the body section (4) and/or installed into the body section (4) while being held up by one of the beam elements (6).

6. A modular catalyst (2) as set forth in any of claims 1 or 4, **characterized in that** at least one catalyst unit (12) is supported by beam element(s) (6) in pivotable manner such that the catalyst unit is movable in direction which is perpendicular to longitudinal axis of the beam element (6).

7. A modular catalyst (2) as set forth in any of claims 1 to 6, **characterized in that** the at least one beam element (6) has been adapted in length such that the number of catalyst units (12) in the catalyst (2) and/or the length of the body section (4) in direction substantially parallel to the longitudinal axis of the beam element(s) (6) can be altered.

8. A modular catalyst (2) as set forth in any of claims 1 to 7, **characterized in that** that the length or reach of the at least one beam element (6) from an end section (8) towards the opposite end of the catalyst (2) has been arranged to be adjustable such that the number of the catalyst units (12) supported by the at least one beam element (6) and/or the length of the body section (4) in direction substantially parallel to the longitudinal axis of the beam element(s) (6) can be altered.

9. A modular catalyst (2) as set forth in any of claims 1-8, **characterized in that** the body section (4) comprises an outer shell (4') for enclosing the catalyst unit(s) (12).

10. The modular catalyst (2) as set forth in claim 9, **characterized in that** the outer shell (4') has been adapted to be movable substantially parallel to the longitudinal axis of the beam element(s) (6) for enclosing and exposing the catalyst unit(s) (12).

11. A method operating a modular catalyst (2) comprising at least one body section (4), which an exhaust gas flow (20) is guided to flow through, the body section (4) comprising at least one catalyst unit (12) supplied with catalyst elements (12b) for emission reduction, and modular catalyst (2) is provided with at least one end section (8), which the exhaust gas flow (20) is guided to flow through, and with at least one elongated beam element (6) connected to the end section (8) for supporting the at least one catalyst unit (12) of the body section (4), **characterized in that** in the method a operating fluid is supplied via the at least one end section (8) and via the at least one beam element (6) to the at least one catalyst unit (12).

12. A method of claim 11, **characterized in that** the at least one beam element (6) is used as a reservoir for the fluid to be supplied via the end section (8).

13. A method of claim any of claims 11-12, **characterized in that** the end section (8) is provided with at least one reservoir means (66, 70) for containing the fluid.

14. A method of any of claims 11-13, **characterized in that** the fluid is air and/or other suitable fluid for sootblowing.

15. A method of any of claims 11-14, **characterized in that** the fluid is gas and/or liquid fuel for regeneration of the catalyst elements (12b).

## Patentansprüche

1. Modularer Katalysator (2) zur Emissionsreduzierung, wobei der Katalysator (2) mindestens einen Körperabschnitt (4) umfasst, durch den ein Abgasstrom (20) gelenkt wird, wobei der Körperabschnitt (4) mindestens eine Katalysatoreinheit (12) umfasst, die mit Katalysatorelementen (12b) zur Emissionsreduzierung versehen sind, und der Katalysator (2) ist mit mindestens einem Endabschnitt (8) versehen, durch den der Abgasstrom (20) gelenkt wird, und mit mindestens einem länglichen Strahlelement (6), das mit dem Endabschnitt (8) zum Abstützen der mindestens einen Katalysatoreinheit (12) des Körperabschnitts (4) verbunden ist, **dadurch gekennzeichnet, dass** der Katalysator (2) mit Mitteln zur Zufuhr eines Betriebsfluids zu mindestens einer Katalysatoreinheit (12) über den mindestens Endabschnitt (8) und über das mindestens eine Strahlelement (6) versehen ist.

2. Modularer Katalysator (2) nach Anspruch 1, **dadurch gekennzeichnet, dass** die Endabschnitte (8) des Katalysators (2) mit geeigneten Aufnahmemitteln (18) für die Strahlelemente (6) versehen sind.

3. Modularer Katalysator (2) nach Anspruch 2, **dadurch gekennzeichnet, dass** der Katalysator (2) mit einer Verbindung 67 mit den Innenvolumina der Strahlelemente (6) versehen ist, wobei die Verbindung durch das Aufnahmemittel (18) an den Endabschnitten (8) verläuft.

4. Modularer Katalysator (2) nach Anspruch 1, **dadurch gekennzeichnet, dass** der Katalysator (2) mit einem Endabschnitt (8) an seinen beiden Enden versehen ist.

5. Modularer Katalysator (2) nach einem der Ansprüche 1 oder 4, **dadurch gekennzeichnet, dass** die Katalysatoreinheit(en) (12) und das/die Strahlelement(e) (6) so zueinander angeordnet sind, dass mindestens eine Katalysatoreinheit (12) aus dem Körperabschnitt (4) herausgenommen werden kann und/oder in den Körperabschnitt (4) eingesetzt werden kann, während sie durch eines der Strahlelemente (6) gehalten wird.

6. Modularer Katalysator (2) nach einem der Ansprüche 1 oder 4, **dadurch gekennzeichnet, dass** mindestens eine Katalysatoreinheit (12) durch ein Strahlelement(e) (6) schwenkbar derart gestützt wird, dass die Katalysatoreinheit in der Richtung beweglich ist, die senkrecht zur Längsachse des Strahlelementes (6) ist.

7. Modularer Katalysator (2) nach einem der Ansprüche 1 bis 6, **dadurch gekennzeichnet, dass** das mindestens eine Strahlelement (6) in der Länge so eingerichtet wurde, dass die Zahl der Katalysatoreinheiten (12) im Katalysator (2) und/oder die Länge des Körperabschnitts (4) in Richtung im Wesentlichen parallel zur Längsachse des/der Strahlelementes(e) (6) geändert werden kann.

8. Modularer Katalysator (2) nach einem der Ansprüche 1 bis 7, **dadurch gekennzeichnet, dass** die Länge oder Ausdehnung des mindestens einen Strahlelementes (6) von einem Endabschnitt (8) zum entgegengesetzten Ende des Katalysators (2) hin so ausgelegt ist, dass sie so eingestellt werden kann, dass die Zahl der Katalysatoreinheiten (12), die durch das mindestens eine Strahlelement (6) gestützt wird, und/oder die Länge des Körperabschnitts (4) in der Richtung im Wesentlichen parallel zur Längsachse des/der Strahlelementes(e) (6) geändert werden kann.

9. Modularer Katalysator (2) nach einem der Ansprüche 1 bis 8, **dadurch gekennzeichnet, dass** der Körperabschnitt (4) eine Außenschale (4') zum Einschließen der Katalysatoreinheit(en) (12) umfasst.

10. Modularer Katalysator (2) nach Anspruch 9, **dadurch gekennzeichnet, dass** die Außenschale (4') so ausgelegt wurde, dass sie im Wesentlichen parallel zur Längsachse des/der Strahlelementes(e) (6) zum Einschließen und Freilegen der Katalysatoreinheit(en) (12) beweglich ist.

11. Verfahren zum Betreiben eines modularen Katalysators (2), der mindestens einen Körperabschnitt (4) umfasst, durch den ein Abgasstrom (20) gelenkt wird, wobei der Körperabschnitt (4) mindestens eine Katalysatoreinheit (12) umfasst, die mit Katalysatorelementen (12b) zur Emissionsreduzierung versehen sind, und der modulare Katalysator (2) mit mindestens einem Endabschnitt (8) versehen ist, durch den der Abgasstrom (20) gelenkt wird, und mit mindestens einem länglichen Strahlelement (6), das mit dem Endabschnitt (8) zum Abstützen der mindestens einen Katalysatoreinheit (12) des Körperabschnitts (4) verbunden ist, **dadurch gekennzeichnet, dass** bei dem Verfahren ein Betriebsfluid über den mindestens Endabschnitt (8) und über das mindestens eine Strahlelement (6) der mindestens einen Katalysatoreinheit (12) zugeführt wird.

12. Verfahren nach Anspruch 11, **dadurch gekennzeichnet, dass** das mindestens eine Strahlelement (6) als Reservoir für das Fluid verwendet wird, das über den Endabschnitt (8) zugeführt werden soll.

13. Verfahren nach einem der Ansprüche 11 bis 12, **dadurch gekennzeichnet, dass** der Endabschnitt (8) mit mindestens einem Reservoirmittel (66, 70) zum Aufnehmen des Fluids versehen ist.

14. Verfahren nach einem der Ansprüche 11 bis 13, **dadurch gekennzeichnet, dass** das Fluid Luft und/oder ein anderes geeignetes Fluid für das Rußblasen ist.

15. Verfahren nach einem der Ansprüche 11 bis 14, **dadurch gekennzeichnet, dass** das Fluid Gas und/oder flüssiger Kraftstoff zum Regenerieren der Katalysatorelemente (12b) ist.

## Revendications

1. Catalyseur modulaire (2) pour la réduction d'émissions, le catalyseur (2) comprenant au moins une section de corps (4) au travers de laquelle un écoulement de gaz d'échappement (20) est guidé pour s'écouler à travers, la section de corps (4) comprenant au moins une unité catalytique (12) dotée d'éléments catalytiques (12b) pour la réduction d'émissions, et le catalyseur (2) est doté d'au moins une section d'extrémité (8) au travers de laquelle l'écoulement de gaz d'échappement (20) est guidé pour s'écouler à travers, et avec au moins un élément de montant allongé (6) relié à la section d'extrémité (8) pour supporter l'au moins une unité catalytique (12) de la section de corps (4),
**caractérisé en ce que** le catalyseur (2) est doté de moyens pour alimenter avec un fluide de travail l'au moins une unité catalytique (12) via l'au moins une section d'extrémité (8) et via l'au moins un élément de montant (6).

2. Catalyseur modulaire (2) tel qu'exposé dans la revendication 1, **caractérisé en ce que** les sections d'extrémité (8) du catalyseur (2) sont dotées de moyens de réception adéquats (18) pour les éléments de montant (6).

3. Catalyseur modulaire (2) tel qu'exposé dans la revendication 2, **caractérisé en ce que** le catalyseur (2) est doté d'une connexion (67) vers des volumes intérieurs des éléments de montant (6), ladite connexion passant par les moyens de réception (18) aux sections d'extrémité (8).

4. Catalyseur modulaire (2) tel qu'exposé dans la revendication 1, **caractérisé en ce que** le catalyseur (2) a été doté d'une section d'extrémité (8) à ses deux extrémités.

5. Catalyseur modulaire (2) tel qu'exposé dans l'une quelconque des revendications 1 ou 4, **caractérisé en ce que** l'unité catalytique, ou les unités catalytiques (12), et le ou les élément (s) de montant (6) ont été disposés en rapport les uns avec les autres de sorte qu'au moins une unité catalytique (12) puisse être sortie de la section de corps (4) et/ou mise en place dans la section de corps (4) tout en étant maintenue par l'un des éléments de montant (6).

6. Catalyseur modulable (2) tel qu'exposé dans l'une quelconque des revendications 1 ou 4, **caractérisé en ce qu'**au moins une unité catalytique (12) est supportée par un/des élément(s) de montant (6) de façon pivotante de sorte que l'unité catalytique est mobile dans une direction perpendiculaire à l'axe longitudinal de l'élément de montant (6).

7. Catalyseur modulable (2) tel qu'exposé dans l'une quelconque des revendications 1 à 6, **caractérisé en ce que** l'au moins un élément de montant (6) a été adapté en longueur de sorte que le nombre d'unités catalytiques (12) dans le catalyseur (2) et/ou la longueur de la section de corps (4) en direction sensiblement parallèle à l'axe longitudinal de l'élément de montant, ou des éléments de montant (6), puisse être modifiée.

8. Catalyseur modulaire (2) tel qu'exposé dans l'une quelconque des revendications 1 à 7, **caractérisé en ce que** la longueur ou étendue de l'au moins un élément de montant (6) d'une section d'extrémité (8) vers l'extrémité opposée du catalyseur (2) a été étudiée pour être ajustable de sorte que le nombre des unités catalytiques (12) supportées par l'au moins un élément de montant (6) et/ou la longueur de la section de corps (4) en direction sensiblement parallèle à l'axe longitudinal de l'élément de montant, ou des éléments de montant (6), peut être modifiée.

9. Catalyseur modulaire (2) tel qu'exposé dans l'une quelconque des revendications 1-8, **caractérisé en ce que** la section de corps (4) comprend une coque extérieure (4') pour enfermer l'unité catalytique ou les unités catalytiques (12).

10. Catalyseur modulaire (2) tel qu'exposé dans la revendication 9, **caractérisé en ce que** la coque extérieure (4') a été adaptée pour être mobile sensiblement parallèlement à l'axe longitudinal de l'élément de montant, ou des éléments de montant (6), pour enfermer et exposer l'unité catalytique ou les unités catalytiques (12).

11. Procédé de fonctionnement d'un catalyseur modulaire (2) comprenant au moins une section de corps (4) au travers laquelle un écoulement de gaz d'échappement (20) est guidé pour circuler à travers, la section de corps (4) comprenant au moins une unité catalytique (12) dotée d'éléments catalytiques (12) pour la réduction d'émissions, et le catalyseur modulaire (2) est doté d'au moins une section d'extrémité (8) au travers de laquelle l'écoulement de gaz d'échappement (20) est guidé pour s'écouler à travers, et avec au moins un élément de montant allongé (6) relié à la section d'extrémité (8) pour supporter l'au moins une unité catalytique (12) de la section de corps (4), **caractérisé en ce que**, dans le procédé, un fluide de travail alimente via l'au moins une section d'extrémité (8) et via l'au moins un élément de montant (6) l'au moins une unité catalytique (12).

12. Procédé selon la revendication 11, **caractérisé en ce que** l'au moins un élément de montant (6) est utilisé en tant que réservoir pour le fluide devant être alimenté via la section d'extrémité (8).

13. Procédé selon l'une quelconque des revendications 11-12, **caractérisé en ce que** la section d'extrémité (8) est dotée d'au moins un moyen de réservoir (66, 70) pour contenir le fluide.

14. Procédé selon l'une quelconque des revendications 11-13, **caractérisé en ce que** le fluide est de l'air et/ou un autre fluide adéquat pour le soufflage de suie.

15. Procédé selon l'une quelconque des revendications 11-14, **caractérisé en ce que** le fluide est du gaz et/ou du combustible liquide pour la régénération des éléments catalytiques (12b).
